(19) Europäisches Patentamt
European Patent Office
Office européen des brevets

(11) **EP 1 319 867 A2**

(12) **EUROPÄISCHE PATENTANMELDUNG**

(43) Veröffentlichungstag:
**18.06.2003  Patentblatt 2003/25**

(51) Int Cl.⁷: **F16H 3/66**

(21) Anmeldenummer: **02027175.5**

(22) Anmeldetag: **05.12.2002**

(84) Benannte Vertragsstaaten:
**AT BE BG CH CY CZ DE DK EE ES FI FR GB GR
IE IT LI LU MC NL PT SE SI SK TR**
Benannte Erstreckungsstaaten:
**AL LT LV MK RO**

(30) Priorität: **14.12.2001  DE 10161815**

(71) Anmelder: **BorgWarner, Inc.
Auburn Hills, Michigan 48326-1728 (US)**

(72) Erfinder: **Bauer, Karl-Heinz
76676 Graben-Neudorf (DE)**

(74) Vertreter: **Westphal, Mussgnug & Partner
Patentanwälte
Am Riettor 5
78048 Villingen-Schwenningen (DE)**

(54) **Einrichtung zum Anfahren eines mit einer Automatikgetriebeanordnung ausgestatteten Kraftfahrzeugs**

(57)  Einrichtung zum Anfahren eines mit einer zwischen einer Antriebswelle (1) und einer Abtriebswelle (2) in einem Getriebegehäuse (7) angeordneten Automatikgetriebeanordnung ausgestatteten Kraftfahrzeuges mit einem Umlaufgetriebe (4) mit einem ersten mit der Antriebswelle (1) koppelbaren Rad (14), mit einem zweiten mit der Antriebswelle (2) koppelbaren Rad (13, 15) und mit einem dritten Rad (12), wobei das dritte Rad (12) über eine Anfahrbremse (S), deren Bremskraft regelbar ist, mit dem Getriebegehäuse (7) verbindbar ist.

Fig. 1

EP 1 319 867 A2

**Beschreibung**

Die Erfindung betrifft eine Einrichtung zum Anfahren eines mit einer Automatikgetriebeanordnung ausgestatteten Kraftfahrzeugs gemäß dem Oberbegriff des Anspruchs 1.

Konventionelle Stufen- oder Mehrgangautomatikgetriebe sind üblicherweise gemäß dem Stand der Technik zur Bereitstellung der notwendigen Anfahrübersetzung aus der Gangübersetzung des ersten Ganges mit einer Anfahreinrichtung ausgestattet. Gemäß dem Stand der Technik sind bis dato zwei Möglichkeiten zur Realisierung einer derartigen Anfahreinrichtung bekannt. So kommt einerseits eine Flüssigkeits- oder nasslaufende Anfahrkupplung (Lamellenkupplung) zur Anwendung, welche ohne Drehmomentenverstärkung arbeitet, andererseits ist auch bekannt, einen sogenannten Föttinger- oder hydrodynamischen Wandler einzusetzen, welcher mit einer Drehmomentenverstärkung größer eins arbeitet.

Ein Ausführungsbeispiel gemäß der letztgenannten Variante wird nachfolgend anhand der Zeichnungsfigur 4 näher beschrieben. Die Zeichnungsfigur 4 zeigt ein Getriebeschema einer Automatikgetriebeanordnung gemäß dem Stand der Technik mit vorgeschaltetem hydrodynamischen Wandler als Anfahreinrichtung. Bei der Automatikgetriebeanordnung handelt es sich um ein automatisches Sechs-Gang-Getriebe wie es beispielsweise in der Übersetzung der europäischen Patentschrift EP 0 434 525 B1, der DE 690 10 472 T2, im Detail beschrieben ist. Diese Automatikgetriebeanordnung sowie die in dieser Druckschrift beschriebenen Anordnungen werden nachfolgend nach dem Erfinder, Pierre Lepelletier, als Automatikgetriebenanordnungen nach Lepelletier benannt.

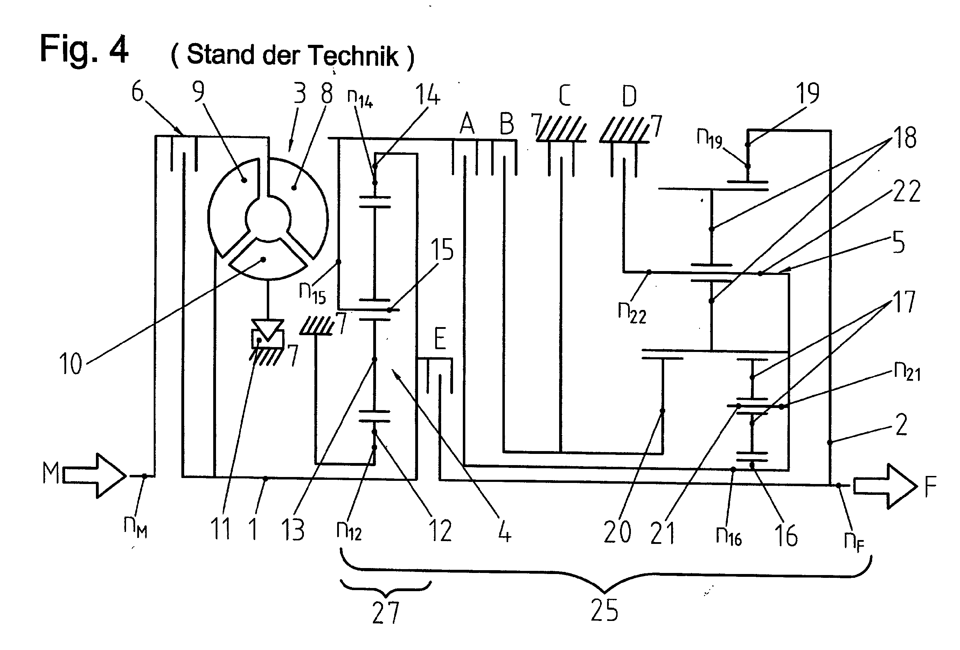

Eine Automatikgetriebeanordnung 25 nach Lepelletier gemäß dem in der Figur 4 gezeigten Ausführungsbeispiel umfaßt ein Getriebegehäuse 7, in dem die nachfolgend angegebenen Einzelteile angeordnet sind, nämlich eine Antriebswelle 1 sowie eine Abtriebswelle 2, ein einfaches Eingangsplanetengetriebe 4 sowie ein doppeltes Ausgangsplanetengetriebe 5, drei Kupplungen A, B und E sowie zwei Bremsen C und D.

Das Eingangsplanetengetriebe 4 besteht in an sich bekannter Art aus dem Sonnenrad 12, dem von dem Steg bzw. Planetenträger 15 gehaltenen Planetenrad 13 sowie dem Hohlrad 14. Der Zeichnungsfigur 4 entnimmt man, dass das Sonnenrad 12, das Planetenrad 13 sowie das Hohlrad 14 in an sich bekannter Art paarweise, nämlich das Sonnenrad 12 mit dem Planetenrad 13 sowie das Planetenrad 13 mit dem Hohlrad 14, in Eingriff sind.

Das Ausgangsplanetengetriebe 5 besteht ebenfalls in an sich bekannter Weise aus dem Sonnenrad 16, dem von dem Innensteg bzw. Innenplanetenträger 21 gehaltenen Innenplanetenrad 17, dem von dem Außensteg bzw. Außenplanetenträger 22 gehaltenen Außenplanetenrad 18 sowie dem Hohlrad 19. Weiterhin ist im vorliegenden Ausführungsbeispiel ein weiteres Sonnenrad 20 vorgesehen.

Der Zeichnungsfigur 4 entnimmt man ferner, dass auch das Sonnenrad 16, das Innenplanetenrad 17, das Außenplanetenrad 18 und das Hohlrad 19 des Ausgangsplanetengetriebes 5 in an sich bekannter Art und Weise ineinandergreifen. So steht das Hohlrad 19 mit dem Außenplanetenrad 18 in Wirkverbindung, das Außenrad 18 wiederum steht mit dem Innenrad 17 in Wirkverbindung und das Innenrad 17 ist mit dem Sonnenrad 16 in Wirkeingriff. Der Figur 4 entnimmt man darüber hinaus, dass auch das Sonnenrad 20 mit dem Außenplanetenrad 18 in Eingriff steht.

Die Antriebswelle 1 ist nunmehr mit dem Hohlrad 14 des Eingangsplanetengetriebes 4 verbunden. Das Sonnenrad 12 des Eingangsplanetengetriebes 4 ist drehfest mit dem Getriebegehäuse 7 verbunden. Der Steg 15 ist einerseits über die Kupplung A mit dem Sonnenrad 16 verbindbar, andererseits ist auch eine Verbindung über die Kupplung B mit dem Sonnenrad 20 herstellbar. Die beiden drehfest miteinander verbundenen Stege, Innensteg 21 und Außensteg 22, des Ausgangsplanetengetriebes 5 sind einerseits über die Bremse D mit dem Getriebegehäuse 7 drehfest verbindbar, andererseits ist über die Kupplung E eine Verbindung zur Antriebswelle 1 herstellbar. Neben der Möglichkeit, das Sonnenrad 20 über die Kupplung B mit dem Steg 15 des Eingangsplanetengetriebes 4 zu verbinden, besteht darüber hinaus die Möglichkeit über die Bremse C eine drehfeste Verbindung mit dem Getriebegehäuse 7 herzustellen.

Der Zeichnungsfigur 4 entnimmt man ferner, dass das Hohlrad 19 des Ausgangsplanetengetriebes 5 drehfest mit der Ausgangswelle 2 verbunden ist.

Mit Hilfe der fünf Schaltelemente, nämlich der drei Kupplungen A, B und E sowie der zwei Bremsen C und D, können durch selektives paarweises Eingreifen verschiedene Übersetzungsverhältnisse zwischen der Antriebswelle 1 und der Abtriebswelle 2 bewirkt werden. Es sind insgesamt sechs Vorwärtsgänge, eine gebremste Neutralstellung sowie ein Rückwärtsgang möglich. Detaillierte Angaben sowie die entsprechende Funktionsbeschreibung ist der o. a. Druckschrift DE 690 10 472 T2 zu entnehmen.

Gemäß dem Stand der Technik ist zum Anfahren eines mit dieser Automatikgetriebeanordnung 25 nach Lepelletier ausgestatten Kraftfahrzeugs eine Anfahreinrichtung mit einem hydrodynamischen Wandler 3 bestehend aus Pumpenrad 8, Turbinenrad 9 und Leitrad 10 vorgeschaltet. Konkret ist das Turbinenrad 9 mit der Antriebswelle 1 der vorgehend beschriebenen Automatikgetriebeanordnung 25 nach Lepelletier verbunden. Das Leitrad 10 ist an sich bekannter Art und Weise über einen Freilauf 11 mit dem Getriebegehäuse 7 verbunden. Das Pumpenrad 8 ist mit der Motorwelle M verbunden. Fernerhin ist gemäß dem Stand der Technik eine Wandlerüberbrückungskupplung 6 vorgesehen, welche nach Abschluss des Anfahrvorgangs eine direkte Verbindung zwischen der Motorwelle M des Verbrennungsmotors und der Antriebswelle 1 ermöglicht.

Obwohl sich eine derartige Anordnung dem Grunde nach bewährt hat, und insbesondere die Realisierung eines Automatikgetriebes mit sehr kleinen Abmessungen ermöglicht wurde, besteht weiterhin der Bedarf, den benötigten Bauraum weiter zu reduzieren. Darüber hinaus hat sich gezeigt, dass eine Anfahreinrichtung mit einem hydrodynamischen Wandler einen vergleichsweise hohen Kraftstoffbedarf zur Folge hat.

Der Erfindung liegt somit die Aufgabe zu Grunde, eine Einrichtung zum Anfahren eines mit einer zwischen einer Antriebswelle und einer Abtriebswelle in einem Getriebegehäuse angeordneten Automatikgetriebeanordnung ausgestatteten Kraftfahrzeugs vorzustellen, welche einerseits einen geringen Platzbedarf aufweist und darüber hinaus die Möglichkeit zur Kraftstoffeinsparung bietet.

Diese Aufgabe wird durch eine Einrichtung zum Anfahren mit dem Merkmalen des Anspruchs 1 gelöst.

Vorteilhafte Ausführungen und Weiterbildungen der Erfindung sind in den Unteransprüchen angegeben.

Die Erfindung basiert auf der Idee, anstelle des Wandlers ein Umlaufgetriebe mit wenigstens drei Rädern vorzusehen, von denen eines ggf. über weitere Getriebestufen mit der Antriebswelle und eines ggf. ebenfalls über weitere Getriebestufen mit der Abtriebswelle koppelbar ist und bei dem das dritte Rad über eine Anfahrbremse, deren Bremskraft regelbar ist, mit dem Getriebegehäuse der Automatikgetriebeanordnung verbindbar ist.

Das Umlaufgetriebe kann vorzugsweise ein einfaches Planetengetriebe mit einem Sonnenrad, einem Planetenrad und einem Hohlrad sein, wobei beispielsweise das Hohlrad mit der Antriebswelle gekoppelt ist, das Planetenrad über eine oder mehrere Getriebestufen mit der Abtriebswelle koppelbar ist und das Sonnenrad über die vorgenannte Anfahrbremse mit dem Gehäuse verbindbar ist. Diese Variante bietet sich insbesondere deshalb an, weil es sich dabei um ein Umlaufgetriebe in an sich bekannter einfacher Bauweise mit geringem Platzbedarf handelt.

Erfindungsgemäß ist vorgesehen, dass das Umlaufgetriebe Bestandteil der Automatikgetriebeanordnung ist. Der Vorteil dieser Variante besteht darin, dass gemäß dem Stand der Technik eine Vielzahl von Automatikgetriebeanordnungen zur Drehzahlumsetzung derartige Umlaufgetriebe, vorzugsweise Planetenradsätze, aufweisen.

Häufig ist es der Fall, dass ein Rad des vorgenannten als Bestandteil des Automatikgetriebes vorhandenen Umlaufgetriebes mit dem Getriebegehäuse drehfest verbunden ist. Es ist daher einfach möglich, die drehfeste Verbindung aufzubrechen und eine regelbare Kopplung über eine Anfahrbremse herzustellen.

Erfindungsgemäß ist vorgesehen, dass das Umlaufgetriebe, bei welchem gemäß dem Stand der Technik ein Rad drehfest mit dem Getriebegehäuse verbunden ist, eine vorgelagerte Untersetzungsstufe oder eine vorgelagerte Übersetzungsstufe der Automatikgetriebeanordnung ist. Zur Realisierung der Erfindung wird dieses Rad nunmehr über die vorgenannte Anfahrbremse mit dem Getriebegehäuse verbunden.

Es ist erfindungsgemäß vorgesehen, eine Einrichung zum Anfahren in eine an sich bekannte Automatikgetriebeanordnung in Lepelletier-Bauweise zu implementieren. Diese Variante hat den Vorteil besonders kleine Baumaße aufzuweisen.

Beispielhaft wird auf die vorgehend beschriebene Ausführungsform gemäß der Figur 4 hingewiesen. Eine derartige Automatikgetriebeanordnung umfasst - wie vorgehend im Detail beschrieben wurde - eine vorgelagerte Untersetzungsstufe 27 in Form eines Planetengetriebes. Dieses Eingangsplanetengetriebe 4 umfasst unter Bezugnahme auf die vorangegangene Beschreibung und die Zeichnungsfigur 4 ein Sonnenrad 12, ein von dem Steg 15 gehaltenes Planetenrad 13 sowie ein Hohlrad 14. Dieses Planetengetriebe ist gemäß dem Stand der Technik eingangsseitig über den hydrodynamischen Wandler 3 oder entsprechend über die Wandlerüberbrückungskupplung 6 mit der Motorwelle M verbunden. Das Sonnenrad 12 dieses Eingangsplanetengetriebes 4 ist ebenfalls gemäß dem Stand der Technik drehfest mit dem Getriebegehäuse 7 verbunden. Erfindungsgemäß ist nunmehr vorgesehen, auf den hydrodynamischen Wandler 3 zu verzichten und die Motorwelle M unmittelbar mit der Antriebswelle 1 zu verbinden, wobei auch eine drehschwingungsdämpfende Einrichtung dazwischengeschaltet werden kann. Darüber hinaus wird anstelle der drehfesten Verbindung des Sonnenrads 12 mit dem Getriebegehäuse 7 die o. a. erfindungsgemäße Kopplung des Sonnenrades 12 mit dem Getriebegehäuse 7 über eine Anfahrbremse hergestellt. Das Übersetzungsverhältnis des ersten Gangs des weitgespreizten Automatikgetriebes in Lepelletier-Bauweise ist dabei ausreichend, um Anfahrvorgänge auch ohne eine hydrodynamische Drehmomentenverstärkung durchzuführen.

Erfindungsgemäß ist vorgesehen, die Anfahrbremse als Reibbremse auszuführen, deren Schlupf regelbar ist. Der Einsatz einer derartigen schlupfgeregelten, reibungsbasierten Anfahrkupplung im automatischen Fahrzeuggetriebe eröffnet völlig neue und umfassende Möglichkeiten der Motordrehzahlanpassung, um daraus Kraftstoff einzusparen, ohne Einschränkungen in den Fahrleistungen in Kauf nehmen zu müssen. Die hier vorgestellte Idee einer Funktionserweiterung der Lepelletier-Automatikgetriebeanordnung erfüllt derzeit alle Anforderungen an ein modernes Fahrzeuggetriebe.

Erfindungsgemäß ist vorgesehen, die Bremskraft der Anfahrbremse derart zu regeln, dass diese zu Beginn des Anfahrvorgangs kleiner ist als am Ende des Anfahrvorgangs. Vorzugsweise wird die Bremskraft so geregelt, dass sie zu Beginn des Anfahrvorgangs im Wesentlichen verschwindet, d. h. dass die Anfahrbremse zu Beginn der Startphase geöffnet ist, und dass die Bremse nach Beendigung des Anfahrvorgangs arretiert ist und damit eine drehfeste Verbindung des Sonnenrads zum Getriebegehäuse hergestellt ist. Bevorzugt wird die Bremskraft vom Beginn des Anfahrvorgangs bis zum Ende des Anfahrvorgangs im Wesentlichen kontinuierlich erhöht.

In Anlehnung an die Getriebeanordnung gemäß dem Stand der Technik gemäß dem in der Figur 4 dargestellten Ausführungsbeispiel ist in der Zeichnung eine Automatikgetriebeanordnung mit erfindungsgemäßer Einrichtung zum Anfahren dargestellt, welche im Folgenden näher beschrieben wird. Es zeigen:

Figur 1    ein Getriebeschema einer Automatikgetriebeanordnung eines Kraftfahrzeugs nach Lepelletier mit erfindungs- gemäßer Einrichtung zum Anfahren

Figur 2    ein Drehzahl-Übersetzungsdiagramm der Automatikge- triebeanordnung nach Lepelletier mit erfindungsgemä- ßer Einrichtung zum Anfahren gemäß Figur 1 - Zustand unmittelbar nach Beginn des Anfahrvorgangs -

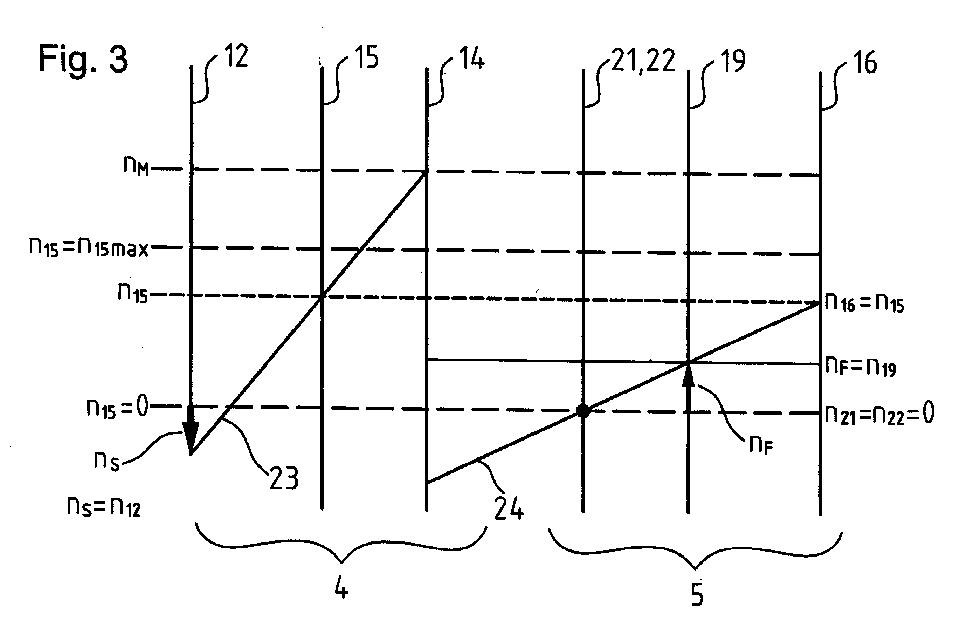

Figur 3    ein Drehzahl-Übersetzungsdiagramm der Automatikge- triebeanordnung gemäß Figur 1 - Zustand unmittelbar vor Beendigung des Anfahrvor- gangs -

Figur 4    ein Getriebeschema einer Automatikgetriebeanordnung nach Lepelletier mit hydrodynamischem Wandler als An- fahreinrichtung - Stand der Technik -

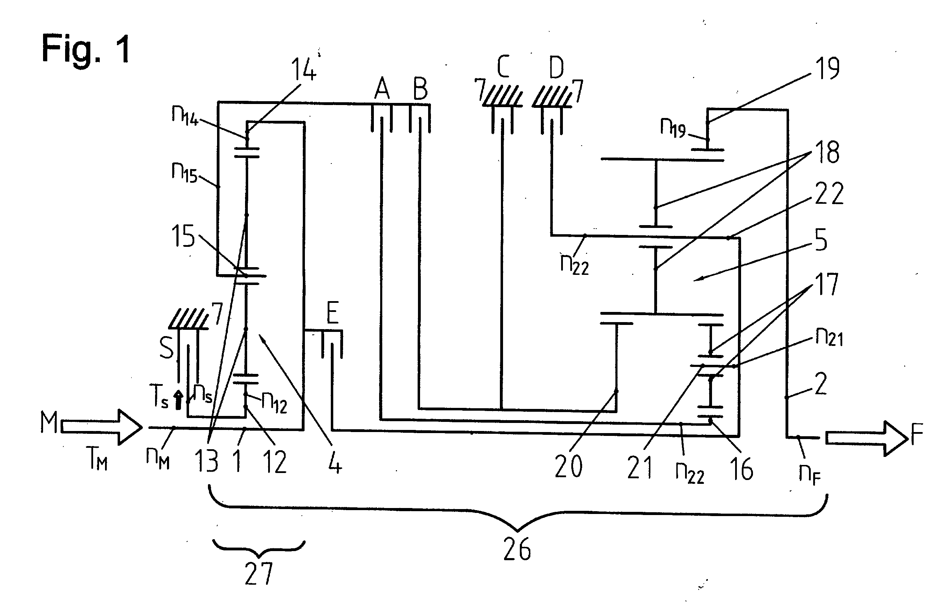

Das in der Figur 1 als Getriebeschema dargestellte Ausführungsbeispiel einer Automatikgetriebeanordnung mit erfindungsgemäßer Einrichtung zum Anfahren basiert im Wesentlichen auf der vorgehend beschriebenen und in der Zeichnungsfigur 4 dargestellten Automatikgetriebeanordnung in Lepelletier-Bauweise mit sechs harmonisch abgestuften Übersetzungen.

Die Bestandteile der Automatikgetriebeanordnung 26 nach Lepelletier sind entsprechend der vorgehend verwendeten Bezeichnung unter der Verwendung identischer Bezugszeichenangaben für gleiche oder ähnliche Bauteile:

Die eingangsseitig mit dem Motor über die Motorwelle M gekoppelte Antriebswelle 1, die ausgangsseitig mit der Fahrzeugantriebswelle F gekoppelte Abtriebswelle 2, die vorgelagerte Untersetzungsstufe 27, welche als Eingangsplanetengetriebe 4 mit Sonnenrad 12, Planetenrad 13 und Hohlrad 14 ausgebildet ist, das Ausgangsplanetengetriebe 5 mit Sonnenrad 16, Innenplanetenrad 17, Außenplanetenrad 18, Hohlrad 19 und Sonnenrad 20 sowie die zum Schalten der Gänge paarweise in Eingriff verbringbaren Schaltelemente Kupplung A, Kupplung B, Kupplung E, Bremse C und Bremse D.

Zur konkreten Kopplung der einzelnen Bauelemente sowie zur Funktionsweise des automatischen Mehrgangsgetriebes wird auf die vorstehende Beschreibungseinleitung sowie die Ausführungen in der darin genannten Druckschrift DE 690 10 472 T2 verwiesen.

Erfindungsgemäß ist nunmehr vorgesehen, anstelle des gemäß der Anordnung gemäß dem Stand der Technik vorhandenen hydrodynamischen Wandlers 3 und der Wandlerüberbrückungskupplung 6 eine schlupfgeregelte, reibungsbasierte Anfahrkupplung, nachfolgend als Anfahrbremse S bezeichnet, einzusetzen. Diese Anfahrbremse S wird anstelle der drehfesten Verbindung zwischen dem Getriebegehäuse 7 und dem Sonnenrad 12 des Eingangsplanetengetriebes 4 angeordnet und stellt eine regelbare Verbindung zwischen dem Getriebegehäuse 7 und diesem Sonnenrad 12 des Eingangsplanetengetriebes 4 dar.

Die Motorwelle M wird nunmehr nicht mehr über den Wandler 3 oder die Wandlerüberbrückungskupplung 6 mit der Antriebswelle 1 gekoppelt, sondern es wird vorzugsweise eine unmittelbare drehfeste oder schwingungsdämpfende Verbindung der Motorwelle M mit der Antriebswelle 1 hergestellt.

Die Funktionsweise dieser erfindungsgemäßen Einrichtung zum Anfahren eines Kraftfahrzeugs wird nachfolgend anhand der Zeichnungsfiguren 2 und 3 erläutert:

Beim Anfahrvorgang sind bei der vorliegenden Automatikgetriebeanordnung 26 nach Lepelletier sowohl die Kupplung A als auch die Bremse D geschlossen, während die Kupplungen B und E sowie die Bremse C in geöffnetem Zustand sind.

Mit Beginn der Startphase ist die Anfahrbremse S geöffnet. Durch die Rotation der mit der Motorwelle M des Verbrennungsmotors verbundenen Antriebswelle 1 wird das Hohlrad 14 der als Eingangsplanetengetriebe 4 ausgebildeten vorgelagerten Untersetzungsstufe 27 mit der Motordrehzal $n_M$ angetrieben. Die Hohlraddrehzahl $n_{14}$ ist also identisch mit der Motordrehzahl $n_M$.

Der Steg 15 des Eingangsplanetengetriebes 4 ist über die arretierte Kupplung A und das Ausgangsplanetengetriebe 5 mit der Abtriebswelle 2 und damit mit der Fahrzeugantriebswelle F verbunden. Da sich das Fahrzeug im Stillstand befindet, ist der Wert der Fahrzeugantriebswellendrehzahl $n_F$ und damit ebenfalls die Stegdrehzahl $n_{15}$ des Eingangsplanetengetriebes 4 Null:

$$n_F = n_{15} = 0$$

Da es sich bei der Untersetzungsstufe 27 um ein Eingangsplanetengetriebe 4 mit einer negativen Standübersetzung $i_0$ handelt, dreht im beschriebenen Fall das Sonnenrad 12 mit der angebauten Anfahrbremse S gegen die Motordrehrichtung mit der Drehzahl

$$n_s = i_0 \times n_M.$$

Unmittelbar nach dem Anfahren wird die Bremskraft der Anfahrbremse S erhöht. Das Sonnenrad 12 des Eingangsplanetengetriebes 4 ist nunmehr nicht mehr vollständig frei beweglich. Dies hat zur Folge, dass neben dem Verdrehen aller Räder 12, 13, 14 des Eingangsplanetengetriebes 4 auch ein Verdrehen des Steegs 15 einsetzen kann.

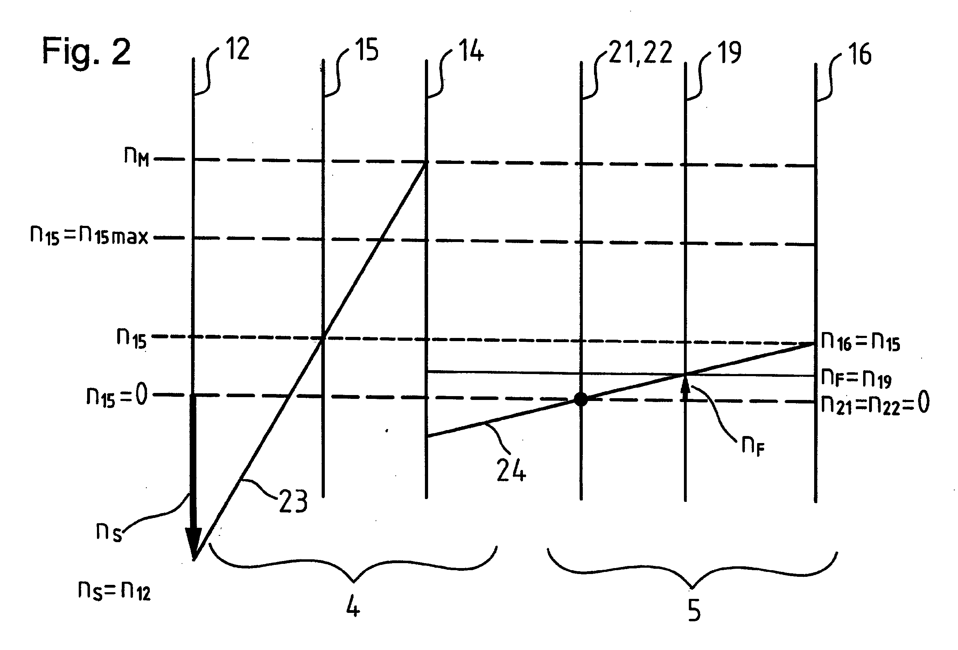

Die Figur 2 zeigt nunmehr ein Drehzahlübersetzungdiagramm der Automatikgetriebeanordnung 26 nach Lepelletier mit erfindungsgemäßer Einrichtung zum Anfahren gemäß der Figur 1 für diesen Zustand unmittelbar nach Beginn des Anfahrvorgangs.

Die linke Seite der Zeichnungsfigur repräsentiert dabei das Eingangsplanetengetriebe 4, die rechte Seite der Zeichnungsfigur 2 das Ausgangsplanetengetriebe 5. Die zur graphischen Bestimmung der Drehzahlen der einzelnen Räder notwendigen Vertikalen sind in der Zeichnungsfigur entsprechend den in der Zeichnungsfigur 1 verwendeten Bezugszeichen gekennzeichnet. So ist die dem als Minusgetriebe ausgebildeten Eingangsplanetengetriebes 4 zugeordnete linke Gerade durch das Bezugszeichen 12 (Sonnenrad), die mittlere Gerade durch das Bezugszeichen 15 (Steg) und die rechte Gerade durch das Bezugszeichen 14 (Hohlrad) gekennzeichnet. Entsprechend sind die dem als Plusgetriebe ausgebildeten Ausgangsplanetengetriebe 5 zugeordneten Geraden von links nach rechts durch die Bezugszeichen 21 und 22 (Innensteg und Außensteg), 19 (Hohlrad) und 16 (Sonnenrad) gekennzeichnet.

Wie sich aus der Zeichnungsfigur 2 ergibt, dreht sich das Hohlrad 14 unmittelbar nach dem Anfahren des Kraftfahrzeugs weiterhin mit der Motordrehzahl

$$n_{14} = n_M.$$

Die Drehzahl $n_s$ der Anfahrbremse S und somit die Drehzal $n_{12}$ des Sonnenrads 12 des Eingangsplanetengetriebes 4 ist aufgrund der Bremswirkung geringfügig reduziert:

$$n_S = n_{12} < i_0 \times n_M.$$

($i_0$ = Standübersetzung).

Aus dem Schnittpunkt der durch die Drehzahl $n_{14}$ des Hohlrads 14 und die Drehzahl $n_{12}$ des Sonnenrads 12 festgelegten Übersetzungsgerade 23 mit der dem Steg 15 zugeordneten Vertikalen ergibt sich der Wert der Stegdrehzahl $n_{15}$.

Diese Stegdrehzahl $n_{15}$ wird mittels der geschlossenen Kupplung A auf das Sonnenrad 16 des Ausgangsplanetengetriebes 5 übertragen. Den entsprechenden Schnittpunkt mit der dem Sonnenrad 16 entsprechenden Vertikalen entnimmt man ebenfalls der Zeichnungsfigur 2. Da beim Anfahren im ersten Gang die Stege 21 und 22 des Ausgangsplanetengetriebes 5 aufgrund der geschlossenen Bremse B unbeweglich sind, lässt sich die Übersetzungsgerade 24 und damit die Hohlraddrehzahl $n_{19}$ des Ausgangsplanetengetriebes 5 bestimmen. Die Hohlraddrehzahl $n_{19}$ liest man in der Zeichnungsfigur 2 am Schnittpunkt der Übertragungsgeraden 24 mit der dem Hohlrad 19 entsprechenden Vertikalen ab.

Mit zunehmender Fahrgeschwindigkeit fällt die Anfahrbremsdrehzahl $n_s$ ab. Die Abtriebsdrehzahl, repräsentiert durch die Fahrzeugantriebswellendrehzahl $n_F$, steigt dabei kontinuierlich an. Das von der Anfahrbremse S aufzubringende Drehmoment $T_s$ entspricht dabei dem um den Faktor der Standübersetzung $i_0$ verkleinerten Betrag des Getriebeeingangsmoments $T_M$:

$$T_s = T_M / i_0.$$

Die Reduzierstufe des Eingangsplanetengetriebes 4 im Lepelletier-System 26 weist im allgemeinen eine Standübersetzung $i_0$ von etwa 2 auf. Dadurch ergibt sich ein um den Faktor $i_0 = 2$ gegenüber dem Getriebeeingangsmoment $T_M$ verringertes Bremsmoment $T_s$.

Die Zeichnungsfigur 3 zeigt ein Drehzahl-Übersetzungsdiagramm der Automatikgetriebeanordnung gemäß der Figur 1 bei weiter erhöhter Bremskraft der Anfahrbremse S, und damit weiter reduzierter Anfahrbremsendrehzahl $n_S$, welche die Drehzahl $n_{12}$ des Sonnenrades 12 festlegt. Entsprechend der vorgehenden Beschreibung lässt sich aus diesem Diagramm in gleicher Weise die abtriebsseitige Fahrzeugantriebswellendrehzahl $n_F$ bestimmen.

Die Abbremsung der Anfahrbremse S wird fortgeführt, bis deren Drehzahl $n_s$ und damit auch die Sonnenraddrehzahl $n_{12}$ des Eingangsplanetengetriebes 4 die Geschwindigkeit Null erreicht. Damit steigt die Stegdrehzahl $n_{15}$ des Eingangsplanetengetriebes 4 auf deren Maximalwert $n_{15, max}$ als feste Relation zur Motordrehzahl $n_M$. Die Fahrzeugantriebswellendrehzahl $n_F$ als Abtriebsdrehzahl des Automatikgetriebes 26 erreicht den dem Übersetzungsverhältnis im ersten Gang entsprechenden Relativwert zur Motordrehzahl $n_M$.

Bezugszeichenliste

1    Antriebswelle
2    Abtriebswelle

| 3 | hydrodynamischer Wandler |
|---|---|
| 4 | Eingangsplanetengetriebe |
| 5 | Ausgangsplanetengetriebe |
| 6 | Wandlerüberbrückungskupplung |
| 7 | Getriebegehäuse |
| 8 | Pumpenrad |
| 9 | Turbinenrad |
| 10 | Leitrad |
| 11 | Freilauf |
| 12 | Sonnenrad |
| 13 | Planetenrad |
| 14 | Hohlrad |
| 15 | Steg/Planetenträger |
| 16 | Sonnenrad |
| 17 | Innenplanetenrad |
| 18 | Aussenplanetenrad |
| 19 | Hohlrad |
| 20 | Sonnenrad |
| 21 | Innensteg/Innenplanetenträger |
| 22 | Aussensteg/Aussenplanetenträger |
| 23 | Übersetzungsgerade |
| 24 | Übersetzungsgerade |
| 25 | Lepelletier-Automatik-Getriebeanordnung |
| 26 | Lepelletier-Automatik-Getriebeanordnung |
| 27 | Vorgelagerte Untersetzungsstufe |

| A | Kupplung |
|---|---|
| B | Kupplung |
| C | Bremse |
| D | Bremse |

| E | Kupplung |
|---|---|
| F | Fahrzeugantriebswelle |
| M | Motorwelle |
| S | Anfahrbremse |

| $n_s$ | Drehzahl der Anfahrbremse |
|---|---|
| $n_M$ | Motordrehzahl |
| $n_F$ | Fahrzeugantriebswellendrehzahl |
| $n_{12}$ | Sonnenraddrehzahl |
| $n_{14}$ | Hohlraddrehzahl |
| $n_{15}$ | Stegdrehzahl |
| $n_{15,max}$ | maximale Stegdrehzahl |
| $n_{16}$ | Sonnenraddrehzahl |
| $n_{21}$ | Innenstegdrehzahl |
| $n_{22}$ | Aussenstegdrehzahl |
| $n_{19}$ | Hohlraddrehzahl |
| $i_0$ | Standübersetzung |

| $T_s$ | Drehmoment der Anfahrbremse |
|---|---|
| $T_M$ | Getriebeeingangsmoment |

## Patentansprüche

1. Einrichtung zum Anfahren eines mit einer zwischen einer Antriebswelle (1) und einer Abtriebswelle (2) in einem Getriebegehäuse (7) angeordneten Automatikgetriebeanordnung ausgestatteten Kraftfahrzeuges mit einem Umlaufgetriebe (4) mit einem ersten mit der Antriebswelle (1) koppelbaren Rad (14), mit einem zweiten mit der Antriebswelle (2) koppelbaren Rad (13, 15) und mit einem dritten Rad (12), **dadurch gekennzeichnet, dass** das dritte Rad (12) über eine Anfahrbremse (S), deren Bremskraft regelbar ist, mit dem Getriebegehäuse (7) verbindbar ist.

2. Einrichtung nach Anspruch 1, **dadurch gekennzeichnet, dass** das Umlaufgetriebe ein einfaches Planetenradgetriebe (4) mit einem Sonnenrad (12) mindestens einem Planetenrad (13) und einem Hohlrad (14) ist, wobei das erste Rad das Hohlrad (14), das zweite Rad das Planetenrad (13) und das dritte Rad das Sonnenrad (12) ist.

3. Einrichtung nach einem der Ansprüche 1 oder 2, **dadurch gekennzeichnet, dass** das Umlaufgetriebe (4) Bestandteil der Automatikgetriebeanordnung (26) ist.

4. Einrichtung nach Anspruch 3, **dadurch gekennzeichnet, dass** das Umlaufgetriebe (4) eine vorgelagerte Untersetzungsstufe (27) oder eine vorgelagerte Übersetzungsstufe der Automatikgetriebeanordnung (26) ist.

5. Einrichtung nach Anspruch 3 oder 4, **dadurch gekennzeichnet, dass** die Automatikgetriebeanordnung eine Automatikgetriebeanordnung (26) eines Kraftfahrzeugs nach Lepelletier ist.

6. Einrichtung nach einem der vorangegangenen Ansprüche, **dadurch gekennzeichnet, dass** die Anfahrbremse eine Reibbremse (S) ist, deren Schlupf regelbar ist.

7. Einrichtung nach einem der vorangegangenen Ansprüche, **dadurch gekennzeichnet, dass** die Bremskraft der Anfahrbremse (S) derart regelbar ist, dass die Bremskraft zu Beginn des Anfahrvorgangs kleiner ist als am Ende des Anfahrvorgangs.

8. Einrichtung nach Anspruch 7, **dadurch gekennzeichnet, dass** die Bremskraft der Anfahrbremse (S) derart regelbar ist, dass die Bremskraft zu Beginn des Anfahrvorgangs im Wesentlichen verschwindet und dass die Anfahrtbremse (S) am Ende des Anfahrvorgangs arretiert ist oder auf geringen Schlupf geregelt ist.

9. Einrichtung nach einem der Ansprüche 7 oder 8, **dadurch gekennzeichnet, dass** das Anfahrelement des Getriebes über die Bremskraft der Anfahrbremse (S) derart regelbar ist, dass die Anfahrbeschleunigung vom Beginn des Anfahrvorgangs bis zum Ende des Anfahrvorgangs über einen Regler frei eingestellt werden kann.

10. Einrichtung nach einem der Ansprüche 7, 8 oder 9 **dadurch gekennzeichnet, dass** die Bremskraft der Anfahrbremse (S) von außerhalb der Getriebeanordnung regelbar ist.

11. Automatikgetriebeanordnung (26), mit einer Einrichtung (4, S) nach einem der vorangegangenen Ansprüche.

12. Verfahren zum Betreiben einer Einrichtung zum Anfahren nach einem der Ansprüche 1 bis 6, **dadurch gekennzeichnet, dass** die Abtriebs-Drehzahl ($n_{19}$, $n_F$) der Automatikgetriebeanordnung Bremskraft der Anfahrbremse (S) derart geregelt wird, dass die zu Beginn des Anfahrvorgangs kleiner ist als am Ende des Anfahrvorgangs.

13. Verfahren nach Anspruch 12, **dadurch gekennzeichnet, dass** die Bremskraft der Anfahrbremse (S) derart geregelt wird, dass die Bremskraft zu Beginn des Anfahrvorgangs im Wesentlichen verschwindet und dass die Anfahrbremse am Ende des Anfahrvorgangs arretiert ist oder auf einstellbaren Schlupf geregelt ist.

14. Verfahren nach Anspruch 12 oder 13, **dadurch gekennzeichnet, dass** das Anfahrelement des Getriebes über die Bremskraft der Anfahrbremse (S) derart geregelt wird, dass die Anfahrbeschleunigung vom Beginn des Anfahrvorgangs bis zum Ende des Anfahrvorgangs über einen Regler frei eingestellt werden kann.

15. Verfahren nach einem der Ansprüche 12 bis 14, **dadurch gekennzeichnet, dass** die Bemskraft der Anfahrbremse (S) derart geregelt wird, dass die Zunahme der Drehzahl $n_F$ der Abtriebswelle (2) einem vorbestimmten Verlauf folgt.

# Fig. 1

Fig. 2

EP 1 319 867 A2

Fig. 3

Fig. 4 (Stand der Technik)